# EUROPEAN PATENT APPLICATION

(11) **EP 4 769 779 A1**
(43) Date of publication of application: **01.07.2026**
(21) Application number: 25854592.0
(22) Date of filing: 06.08.2025
(51) Int. Cl.: H01M 50/383, H01M 50/271, H01M 50/233, H01M 50/249

(54) **BATTERY MODULE, BATTERY PACK COMPRISING SAME, AND VEHICLE**

(30) Priority: 16.08.2024 KR 20240109529
(71) Applicant: LG ENERGY SOLUTION, LTD., Seoul 07335 (KR)
(72) Inventor: Park, Sangjun, Daejeon 34122 (KR); Jung, Kitaek, Daejeon 34122 (KR)
(74) Representative: BCKIP Part mbB
(86) International application number: PCT/KR2025/011776
(87) International publication number: WO 2026/038785

(57) **Abstract**

A battery module according to an embodiment of the present invention includes a cell assembly including a plurality of battery cells, a module case configured to house the cell assembly in an internal space, a frame cover positioned on an upper portion of the module case to cover the cell assembly and having at least one venting hole, and a support plate configured to form a predetermined space with the frame cover.

## Description

### [TECHNICAL FIELD]

The present invention relates to a battery module, a battery pack comprising the same, and a vehicle.

### [BACKGROUND ART]

A secondary battery, unlike a primary battery which is non-rechargeable, refers to a battery capable of charging and discharging, and is applied not only to portable devices but also to electric vehicles (EVs, Electric Vehicles) and hybrid electric vehicles (HEVs, Hybrid Electric Vehicles) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be formed by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When a plurality of battery cells are connected in series and/or in parallel to form a battery pack, it is common practice to first configure a battery module including at least one battery cell, preferably a plurality of battery cells, and then construct a battery pack by combining at least one such battery module with other components. Here, a battery module refers to a unit composed of a plurality of battery cells connected in series and/or in parallel, while a battery pack refers to a structure in which a plurality of battery modules are interconnected in series and/or in parallel to enhance capacity and output.

Meanwhile, in conventional battery packs, when a thermal event occurs in some of the battery modules, flames discharged from the frame cover of the affected battery module may impinge upon a refractory cover provided on the inner surface of the pack cover. During such an event, the flame temperature may rise to about 1,000°C, whereby the adhesive applied between the refractory cover and the pack cover may melt, potentially causing the refractory cover to separate from the pack cover and fall downward.

That is, conventional battery packs are deficient in a structure configured to prevent detachment of the refractory cover. In such a case, when the refractory cover and/or fragments caused by thermal deterioration fall onto the battery module, they may obstruct the venting holes provided in the module, thereby adversely affecting the thermal propagation suppression function of the module. For example, when the refractory cover is detached or fragments fall, they may block the venting holes formed in the frame cover of the battery module, thereby impeding gas venting and serving as a factor that accelerates thermal propagation within the module.

### [SUMMARY OF THE INVENTION]

### [TECHNICAL PROBLEM]

It is an object of the present invention to provide a battery pack having a structural configuration that prevents detachment of a refractory cover affixed to the inner surface of the top cover of the battery pack, even in the event of a thermal event occurring within the pack.

Another object of the present invention is to provide a structure that prevents fragments from falling onto the battery module, even when a thermal event occurs within the battery pack.

However, the technical objects to be solved by the present invention are not limited to those set forth above, and other objects not expressly mentioned will be clearly understood by those skilled in the art from the following description of the invention.

### [SOLUTION TO THE PROBLEM]

In one embodiment of the present invention devised to solve the foregoing technical problems, there is provided a battery module comprising: a cell assembly including a plurality of battery cells; a module case configured to accommodate the cell assembly within an internal space; a frame cover disposed on an upper portion of the module case to cover the cell assembly, the frame cover being provided with at least one venting hole; and a support plate configured to form a predetermined spacing between the frame cover and the cell assembly.

Preferably, the support plate may be configured to define a vacant space in a peripheral region surrounding the venting hole provided in the upper portion of the battery module.

For example, the support plate may be configured with a structure protruding upward from the frame cover.

In one aspect of the present invention, the support plate may comprise: a main body portion extending in a horizontal direction; and at least one leg portion extending vertically from the main body portion.

Preferably, the main body portion may be disposed at a predetermined distance from the frame cover of the battery module.

In this case, the main body portion may include a mesh net and a flange portion formed along an edge of the mesh net.

In another aspect of the present invention, the leg portion may comprise: a horizontal extension portion extending in a horizontal direction; and a vertical extension portion bent and extending vertically from an end of the horizontal extension portion.

In yet another aspect of the present invention, the module case may comprise end plates coupled to both longitudinal sides of the module case and configured to cover both longitudinal ends of the cell assembly.

In one aspect, the end plate may comprise at least one recess recessed inward from its surface, and the leg portion may be mounted in the recess formed in the end plate of the battery module.

Meanwhile, the present invention provides a battery pack comprising: at least one battery module according to the foregoing embodiment; a lower case configured to accommodate the battery module; a pack cover disposed on an upper portion of the lower case so as to cover the upper portion of the battery module; and a refractory cover provided on an inner surface of the pack cover.

Preferably, the refractory cover may comprise mica.

In one aspect of the present invention, the support plate may be disposed in a space between the refractory cover and the battery module, and may be configured to support the refractory cover in a direction facing the pack cover.

Preferably, the support plate may be configured to be in direct surface contact with at least a portion of the refractory cover.

In addition, the present invention provides a vehicle comprising at least one battery pack according to the aforementioned embodiment.

### [ADVANTAGEOUS EFFECTS OF THE INVENTION]

According to the present invention, even when thermal propagation occurs in a battery module contained within the battery pack, the refractory cover provided on the inner surface of the top cover of the battery pack is prevented from detaching and falling toward the battery module.

Additionally, according to the present invention, fragments are prevented from falling onto the battery module, even when a thermal event occurs inside the battery pack.

Furthermore, according to the present invention, even when thermal propagation occurs in the battery module, the refractory cover is prevented from obstructing the venting holes of the battery module, thereby ensuring smooth gas venting is maintained.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a view illustrating a battery module according to one embodiment of the present invention.
FIG. 2 is an exploded perspective view of the battery module shown in FIG. 1.
FIG. 3 is a view illustrating a battery cell according to one embodiment of the present invention.
FIG. 4 is a view illustrating a support plate according to one embodiment of the present invention.
FIG. 5 is a view illustrating the assembled structure of a support plate and a front end plate according to one embodiment of the present invention.
FIG. 6 is an enlarged view of a portion of FIG. 5.
FIG. 7 is a plan view of the structure shown in FIG. 6, as viewed from above.
FIG. 8 is a view illustrating the assembled structure of a support plate and a rear end plate according to one embodiment of the present invention.
FIG. 9 is an enlarged view of a portion of FIG. 8.
FIG. 10 is a cross-sectional view taken along a vertical plane of the structure shown in FIG. 9.
FIG. 11 is a view illustrating a battery pack including at least one battery module of FIG. 1.
FIG. 12 is a view illustrating the structure of a conventional battery pack.
FIG. 13 is a view illustrating a thermal event occurring within the conventional battery pack of FIG. 12.
FIG. 14 is a view illustrating the structure of a battery pack according to one embodiment of the present invention.
FIG. 15 is a view illustrating a thermal event occurring within the battery pack of FIG. 14.
FIG. 16 is a view illustrating a vehicle including the battery pack of FIG. 11.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

A statement that two subjects being compared are the same means that they are 'substantially identical.' Accordingly, 'substantial identity' may encompass variations within a tolerance deemed acceptable by one of ordinary skill in the art, for instance, a deviation of 5% or less. In addition, a parameter described as "uniform" within a predetermined region may refer to its average uniformity.

Throughout this specification, unless the context dictates otherwise, each component may be singular or plural.

The placement of a component 'on (or below)' or 'above (or beneath)' another component is to be understood as encompassing not only the case where the component is in direct contact with the upper (or lower) surface of the other component, but also the case where another component may be interposed therebetween.

Furthermore, when a component is described as being 'connected,' 'coupled,' or 'joined' to another component, it is to be understood that the components may be directly connected, coupled, or joined to each other, or may be connected, coupled, or joined via another component, with another component being interposed therebetween.

Throughout the specification, "A and/or B" shall mean A, B, or both A and B, and "C to D" shall mean a range from C to D inclusive, unless otherwise stated.

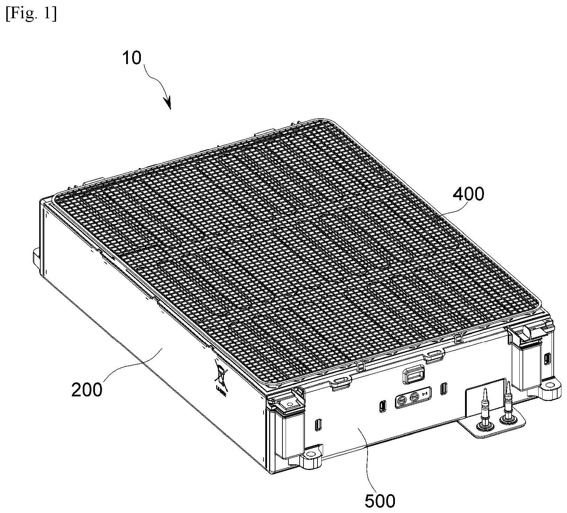

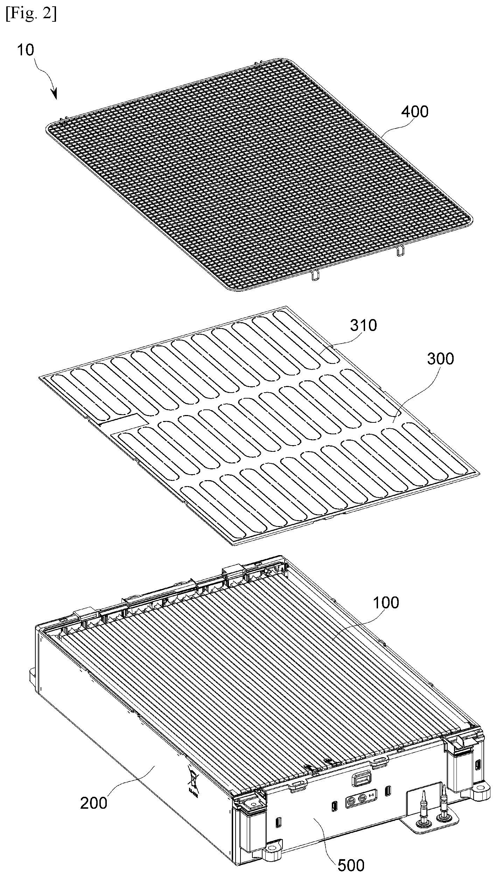

FIG. 1 is a perspective view illustrating a battery module (10) according to an embodiment of the present invention, and FIG. 2 is an exploded perspective view thereof.

Referring to FIGS. 1 and 2, a battery module (10) according to the present invention includes a cell assembly (100), a module case (200), a frame cover (300), and a support plate (400). Additionally, the battery module (10) may further include an end plate (500).

The cell assembly (100) may include a plurality of battery cells (110). The plurality of battery cells (110) may be stacked in at least one direction. More specifically, the plurality of battery cells (110) may be arranged in at least a horizontal direction. The plurality of battery cells (110) may be configured to be arranged side-by-side in a horizontal direction while in an upright orientation. For example, with reference to FIG. 2, the plurality of battery cells (110) may be configured to be arranged side-by-side in a horizontal direction while in an upright orientation.

Hereinafter, each of the plurality of battery cells (110) will be described in greater detail.

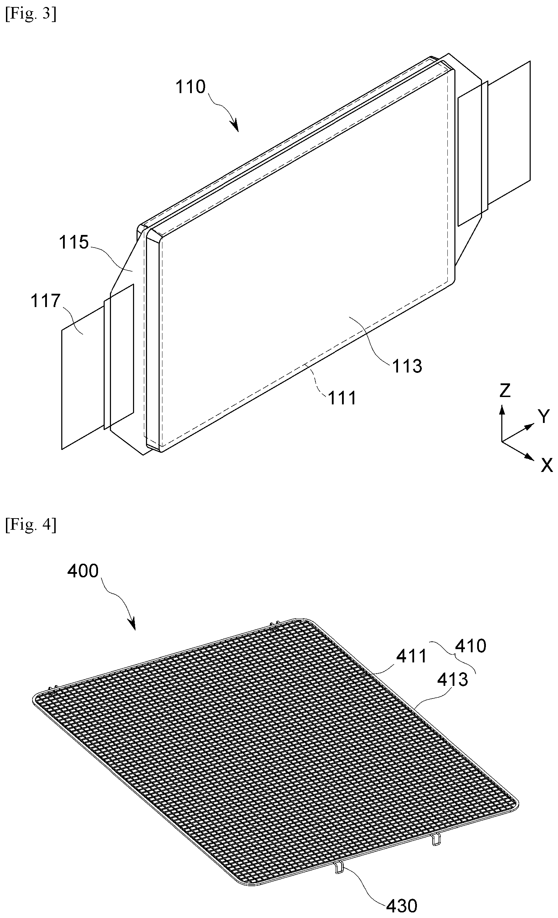

FIG. 3 is a view illustrating a battery cell (110) according to an embodiment of the present invention.

Referring to FIG. 3, the battery cell (110) may be a secondary battery, for example, a pouch-type battery cell (110). However, the present invention is not limited to this type of battery cell (110); other types of battery cells (110), such as cylindrical or prismatic cells, may also be employed in the battery module (10).

Hereinafter, an exemplary case in which the battery cell (110) is a pouch-type cell will be described with reference to FIG. 3. Referring to FIG. 3, the battery cell (110) may comprise an electrode assembly (111), a receiving portion (113) configured to house the electrode assembly (111), a sealing portion (115) formed along the periphery of the receiving portion (113), and a pair of electrode leads (117) connected to the electrode assembly (111) and drawn outward from the sealing portion (115).

The pair of electrode leads (117) are coupled to electrode tabs (not shown) provided in the electrode assembly (111) and may be drawn outward through the sealing portion (115). The pair of electrode leads (117) may be formed to extend along the longitudinal direction of the battery cell (110). The pair of electrode leads (117) may be drawn outward in the same direction or in mutually opposite directions.

Referring to FIG. 3, the battery cell (110) may be configured to discharge vent gas through the upper sealing portion (115). The sealing portion (115) may be provided with a venting area, configured to prevent an increase in internal pressure caused by gas generated inside the battery cell (110). The venting area is formed in a portion of the sealing portion (115) and corresponds to a structurally weaker region than the surrounding area, such that it can be readily ruptured when internal pressure is applied. The venting area may, for example, be a region where the sealing portion is formed to be weaker than the surrounding region. In this case, the venting area may be formed on either lateral edge of the sealing portion (115). In particular, the venting area may be formed on an upper portion of either lateral edge of the sealing portion (115).

According to this structure, gas generated inside the battery cell (110) may be discharged to the exterior of the battery cell (110) through a venting area formed at the upper end of the battery cell (110). Accordingly, the gas may be discharged to the exterior of the battery module (10) through the frame cover (300) disposed on the upper side of the battery cell (110). In other words, with this structure, high-temperature gas and flames within the module may be discharged smoothly.

Referring again to FIGS. 1 and 2, the module case (200) may be configured to accommodate the cell assembly (100) within its internal space. That is, the module case (200) defines an internal space and can house the cell assembly (100) therein. The module case (200) may be configured to accommodate the cell assembly (100). The module case (200) may have a form in which one longitudinal side and the other longitudinal side are open.

The module case (200) may include a base plate extending horizontally and a side plate extending upward from the base plate. In this case, the base plate may be configured to have a plate shape that extends substantially in a horizontal direction. The side plate may be configured to have a plate shape extending in an approximately vertical direction. The base plate and the side plate may be configured to be perpendicular to each other. That is, the module case (200) may be configured as a U-shaped frame.

Meanwhile, the side plate may be provided in the width direction of the battery module (10). That is, the module case (200) may have a configuration in which a side plate is provided in the width direction, and the case is open at its longitudinal ends. In another aspect of the present invention, the base plate and the side plate may be integrally formed. Alternatively, the base plate and the side plate may be configured to be detachable.

Referring again to FIGS. 1 and 2, the frame cover (300) may be positioned on at least one side of the module case (200). Preferably, the frame cover (300) may be mounted on the upper portion of the module case (200). That is, the frame cover (300) can cover the cell assembly (100) at the upper portion of the module case (200).

Meanwhile, since the battery cell (110) has a venting area formed on an upper portion of either lateral edge of the sealing portion (115), the venting gas through the upper sealing portion (115) may be smoothly discharged to the exterior through the frame cover (300).

In one aspect of the present invention, the frame cover (300) may be configured to be removably coupled to the module case (200). For example, the frame cover (300) may be coupled to and/or uncoupled from the end plate (500), which will be described in detail later. This will be described in detail below.

In another aspect of the present invention, the frame cover (300) may be configured to discharge venting gas. Preferably, the frame cover (300) can be configured to control the direction of discharge of the venting gas.

Referring again to FIG. 2, the frame cover (300) may be provided with at least one venting hole (310). The frame cover (300) can be configured to cover the upper portion of the cell assembly (100). For example, the frame cover (300) may be configured to have a plate shape extending in an approximately horizontal direction.

The venting hole (310) can be configured to discharge venting gas. That is, the venting hole (310) may be configured as a through-hole that penetrates the frame cover (300) in a vertical direction. The venting hole (310) may be provided in an elongated form along the sealing portion (115) of the battery cell (110). With this structure, high-temperature gas and flame generated inside the module can be discharged smoothly.

A plurality of the venting holes (310) may be formed on the frame cover (300). For example, the plurality of the venting holes (310) may be provided along the sealing portion (115) of the battery cell (110).

According to this structure, even if a large amount of gas is generated within the battery module (10), the gas can be smoothly discharged to the exterior of the battery module (10) through the plurality of venting holes (310). That is, the residence time of the venting gas inside the module case (200) can be minimized.

FIG. 4 is a view illustrating a support plate (400) according to one embodiment of the present invention.

Referring to FIGS. 1 and 4, the support plate (400) may be configured to form a predetermined space with the frame cover (300). The support plate (400) may be positioned on the upper side of the frame cover (300). That is, the support plate (400) may be disposed on the frame cover (300). The support plate (400) may be disposed so as to be spaced upward from the frame cover (300).

Preferably, the support plate (400) may be configured to define a vacant space in a peripheral region surrounding the venting hole (310) provided on the upper portion of the battery module (10). For example, the support plate (400) may be configured with a structure protruding upward from the frame cover (300).

According to this structure, when a thermal event occurs in one of the battery modules (10) inside the battery pack, the refractory cover (60) provided on the inner surface of the pack cover (52) may be prevented from falling onto the battery module (10) even when its adhesive bond is weakened by heat. In addition, according to this configuration, the refractory cover (60) may be prevented from obstructing the venting hole (310) of the battery module (10), thereby maintaining smooth gas venting.

Referring again to FIG. 4, the support plate (400) may comprise a main body portion (410) and a leg portion (430).

The main body portion (410) may be configured in a form extending in a horizontal direction. The main body portion (410) may have a substantially planar shape extending in a horizontal direction.

The main body portion (410) may include a mesh net (411) and a flange portion (413) provided along an edge of the mesh net (411). According to this structure, the mesh net (411) may prevent sparks generated in the cell assembly (100) from being discharged outward from the cell assembly (100). In addition, fire may be effectively prevented from spreading to other battery modules (10) adjacent to the battery module (10) in which a thermal event has occurred. In addition, according to this configuration, heat-fractured fragments may be effectively prevented from falling onto the battery module (10), while simultaneously preventing blockage of the venting hole (310), thereby allowing vent gas to be smoothly discharged.

Meanwhile, the leg portion (430) may be formed to extend vertically from the main body portion (410).

Accordingly, the main body portion (410) may be configured to be spaced apart from the frame cover (300) of the battery module (10) by a predetermined distance. That is, the main body portion (410) may be disposed above the frame cover (300) of the battery module (10) at a predetermined distance therefrom.

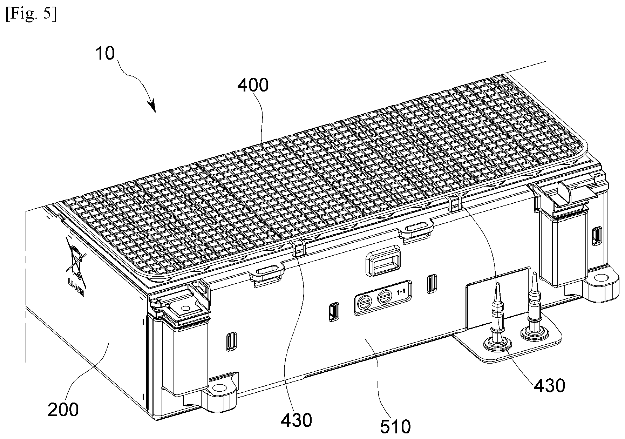

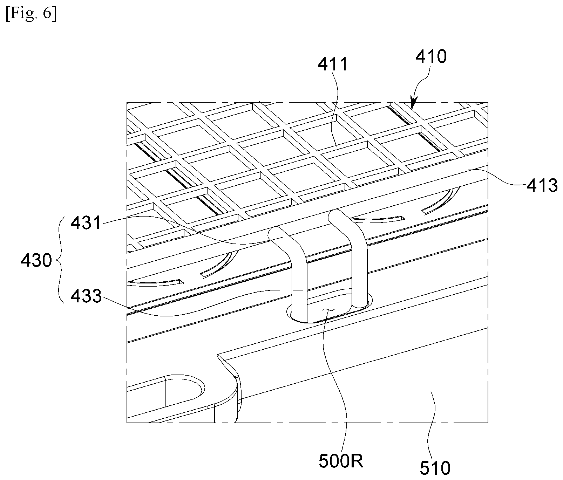

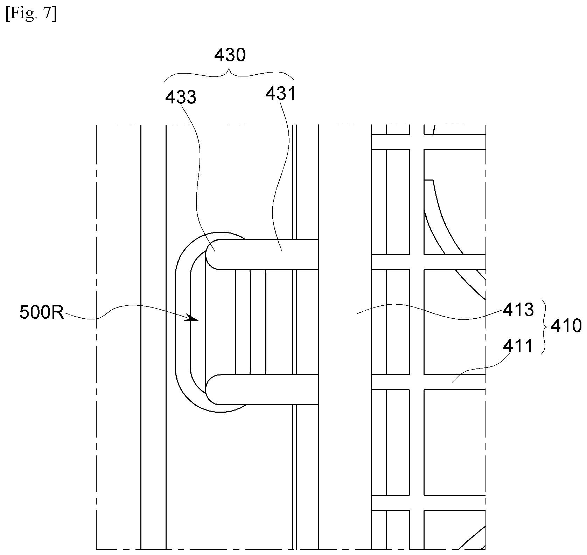

FIG. 5 illustrates the assembled structure of a support plate (400) and a front end plate (510) according to one embodiment of the present invention, FIG. 6 is an enlarged view of FIG. 5, and FIG. 7 is a top plan view thereof.

Referring to FIGS. 5 to 7, in one embodiment of the present invention, the leg portion (430) may comprise a horizontal extension portion (431) and a vertical extension portion (433).

The horizontal extension portion (431) may be formed to extend horizontally from the flange portion (413). The vertical extension portion (433) may be formed to bend and extend vertically from an end of the horizontal extension portion (431). The horizontal extension portion (431) may be set variably depending on the distance to the recess (500R) formed in the end plate (500).

As one embodiment of the present invention, and referring to FIG. 6, the leg portion (430) may be configured in the form of a wire affixed to the flange portion (413). That is, the leg portion (430) may be configured to form a closed loop together with the flange portion (413). Alternatively, in another embodiment of the present invention, the leg portion (430) may comprise a rod structure protruding from the flange portion (413). Alternatively, in yet another embodiment of the present invention, the leg portion (430) may comprise a plate structure bent and extended from the flange portion (413). The shape of the leg portion (430) is not limited to the structures illustrated in FIGS. 5 to 7, and any structure that enables the leg portion (430) to be inserted into or fixed to the end plate (500) shall fall within the scope of the present invention. However, since the leg portion (430) is a structure that must secure clearance in the vertical direction, it is preferable that it include a vertical extension portion (433).

Referring again to FIGS. 5 to 7, the battery module (10) may include an end plate (500). The end plate (500) may be coupled to one longitudinal side and the other longitudinal side of the module case (200). The end plate (500) may be configured to cover both longitudinal ends of the cell assembly (100).

More specifically, the end plate (500) may include a front end plate (510) and a rear end plate (530).

The front end plate (510) may be configured to be coupled to one longitudinal side of the module case (200) so as to cover one longitudinal end of the cell assembly (100). The rear end plate (530) may be configured to be coupled to the opposite longitudinal side of the module case (200) so as to cover the other longitudinal end of the cell assembly (100).

In this case, the support plate (400) may be configured to be coupled to at least one of the front end plate (510) and the rear end plate (530). Preferably, the support plate (400) may be configured to be couplable to each of the front end plate (510) and the rear end plate (530).

For example, referring to FIG. 2, the front end plate (510) may include at least one recess (500R). The recess (500R) has a structure that can be coupled to the support plate (400). Specifically, the front end plate (510) may include at least one recess (500R) formed inward from the surface. In this case, the leg portion (430) may be mounted on the recess (500R) provided in the front end plate (510) of the battery module (10). That is, the leg portion (430) may be configured to be restrained by the recess (500R).

Referring to FIG. 7, the recess (500R) may be formed as a groove or hole recessed inward in the end plate (500), and the vertical extension portion (433) of the leg portion (430), which protrudes vertically, may be inserted into the recess (500R), thereby allowing the support plate (400) to be fixed at a predetermined position. In particular, the horizontal movement of the support plate (400) may be restricted by the coupling of the recess (500R) and the leg portion (430). In other words, the support plate (400) may be restrained in the horizontal direction by the coupled structure of the recess (500R) and the leg portion (430). That is, by the coupled structure of the recess (500R) and the leg portion (430), the support plate (400) may be restrained in the forward, backward, left, and right directions.

In another embodiment of the present invention, the recess (500R) may be formed with a structure other than a simple recessed groove. For example, the recess (500R) may be configured to provide a snap-fit engagement with the leg portion (430) of the support plate (400). The shape of the recess (500R) is not particularly limited, and any structure that allows coupling to and decoupling from the leg portion (430) shall fall within the scope of the present invention.

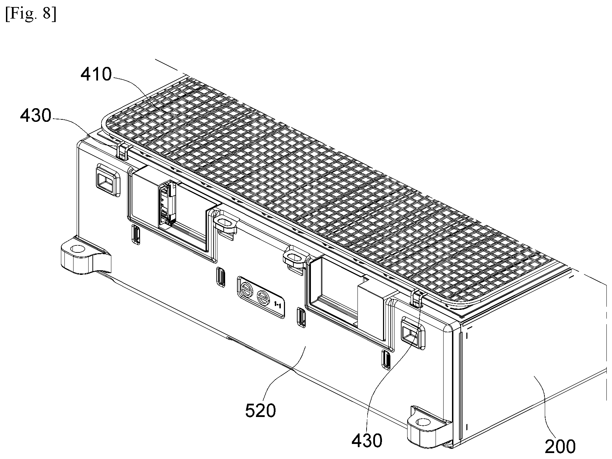

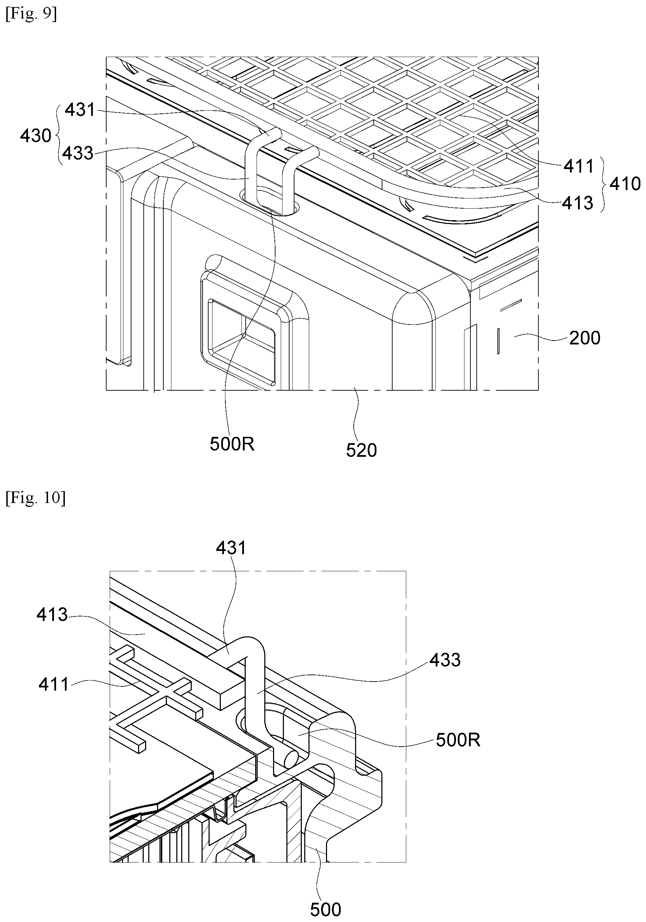

FIG. 8 illustrates the assembled structure of a support plate (400) and a rear end plate (530) according to one embodiment of the present invention, FIG. 9 is an enlarged view of FIG. 8, and FIG. 10 is a cross-sectional view of FIG. 9 taken along a vertical plane.

Likewise, referring to FIGS. 8 to 10, the rear end plate (530) may include at least one recess (500R). The recess (500R) has a structure that can be coupled to the support plate (400). Specifically, the rear end plate (530) may include at least one recess (500R) recessed inward from the surface. In this case, the leg portion (430) may be mounted on the recess (500R) provided in the rear end plate (530) of the battery module (10). That is, the leg portion (430) may be configured to be restrained by the recess (500R).

Referring to FIG. 10, the vertical extension portion (433) of the leg portion (430) may be formed with a height greater than the depth of the recess (500R). According to this structure, the main body portion (410) of the support plate (400) may be maintained spaced apart from the frame cover (300) of the battery module (10) by a predetermined distance. That is, according to this configuration, a predetermined space may be defined between the frame cover (300) of the battery module (10) and the main body portion (410) of the support plate (400). Accordingly, when a thermal event occurs in one of the battery modules (10) inside the battery pack, the refractory cover (60) provided on the inner surface of the pack cover (52) may be prevented from falling onto the battery module (10) even when its adhesive bond is weakened by heat. In addition, according to this configuration, the refractory cover (60) may be prevented from obstructing the venting hole (310) of the battery module (10), thereby maintaining smooth gas venting.

In one aspect of the present invention, the support plate (400) may be configured to be detachable from the module case (200).

For example, the support plate (400) may be coupled to and/or uncoupled from the front end plate (510) and/or the rear end plate (530), which will be described later. Alternatively, the support plate (400) may be configured to be detachable from the module case (200).

In one aspect of the present invention, a plurality of leg portions (430) may be provided.

For example, referring to FIG. 5, two leg portions (430) may be provided on the front end plate (510) side, spaced apart from each other by a predetermined interval. In addition, referring to FIG. 8, two leg portions (430) may be provided on the rear end plate (530) side, spaced apart from each other by a predetermined interval. However, the number of leg portions (430) is not limited thereto. A plurality of the leg portions (430) may be provided to the extent that they do not interfere with other structures provided on the end plate (500).

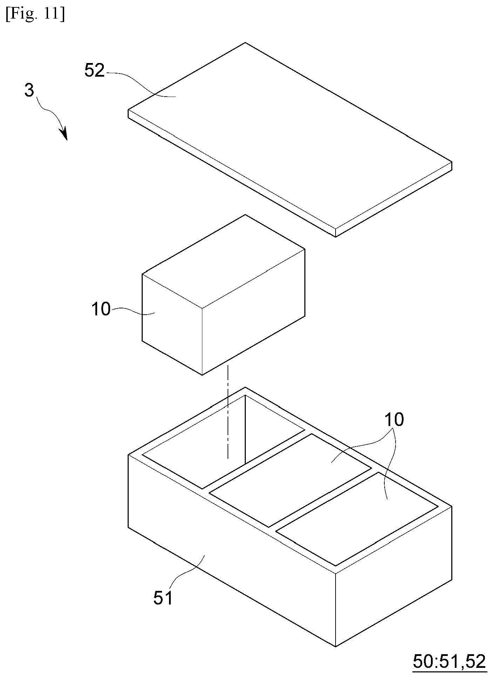

FIG. 11 is a view illustrating a battery pack including at least one battery module (10) of FIG. 1.

Referring to FIG. 11, a battery pack (3) according to the present invention may include at least one battery module (10) according to the present invention described above. In addition, the battery pack (3) according to the present invention may include a pack case (50) configured to accommodate the at least one battery module (10). In this case, the pack case (50) may include a lower case (51) and a pack cover (52). The pack cover (52) may be configured to cover the upper portion of the battery module (10) atop the lower case. For example, the pack cover (52) may be configured as a substantially plate-shaped structure that covers the upper portion of the battery pack. For example, the pack cover (52), which is a substantially plate-shaped structure, may have a structure in which at least a portion thereof protrudes upward.

In one aspect of the present invention, the pack cover (52) may be disposed spaced apart from the frame cover (300) of the battery module (10) accommodated within the battery pack (3) by a predetermined distance, thereby ensuring smooth movement of vent gas.

In addition to the battery module (10), various other components may further be included, such as components of the battery pack (3) known at the time of filing of the present invention, for example, a BMS, a pack case, a relay, and a current sensor.

In addition to the battery module (10), various other components may further be included, such as components of the battery pack (3) known at the time of filing of the present invention, for example, a BMS, a pack case, a relay, and a current sensor.

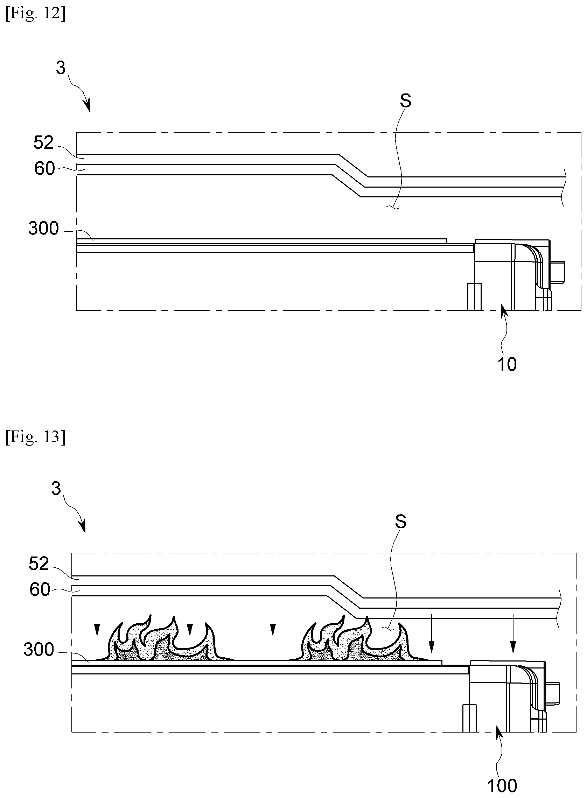

FIG. 12 illustrates the structure of a conventional battery pack, and FIG. 13 illustrates a case in which a thermal event occurs within the conventional battery pack of FIG. 12.

Referring to FIGS. 12 and 13, the conventional battery pack does not include a support plate (400). That is, although a predetermined space exists between the frame cover (300) of the battery module (10) and the pack cover (52) of the battery pack, the conventional battery pack does not comprise a support plate (400) for maintaining said predetermined space. Meanwhile, a refractory cover (60) is attached or applied to prevent the pack cover (52) of the battery pack from being destroyed by flame during thermal propagation (TP) of the battery module (10).

However, as shown in FIG. 13, when a thermal event occurs in some of the battery modules (10), the flame discharged from the frame cover (300) of the battery module (10) may propagate toward the refractory cover (60) disposed on the inner surface of the pack cover (52) of the battery pack. In this case, during thermal propagation of the battery module (10), the flame temperature may reach approximately 1000°C, whereby the adhesive applied between the refractory cover (60) and the pack cover (52) melts, causing the refractory cover (60) to detach from the pack cover (52) and fall downward. That is, a conventional battery pack has the problem that it lacks a structure capable of preventing detachment of the refractory cover (60). In this way, when the refractory cover (60) falls onto the battery module (10), it may block the venting hole (310) of the battery module (10), thereby adversely affecting the thermal propagation prevention performance of the battery module (10). For example, when the refractory cover (60) detaches or fragments thereof fall, the venting hole (310) of the frame cover (300) of the battery module (10) may be blocked, thereby impeding gas venting and accelerating thermal propagation inside the battery module (10).

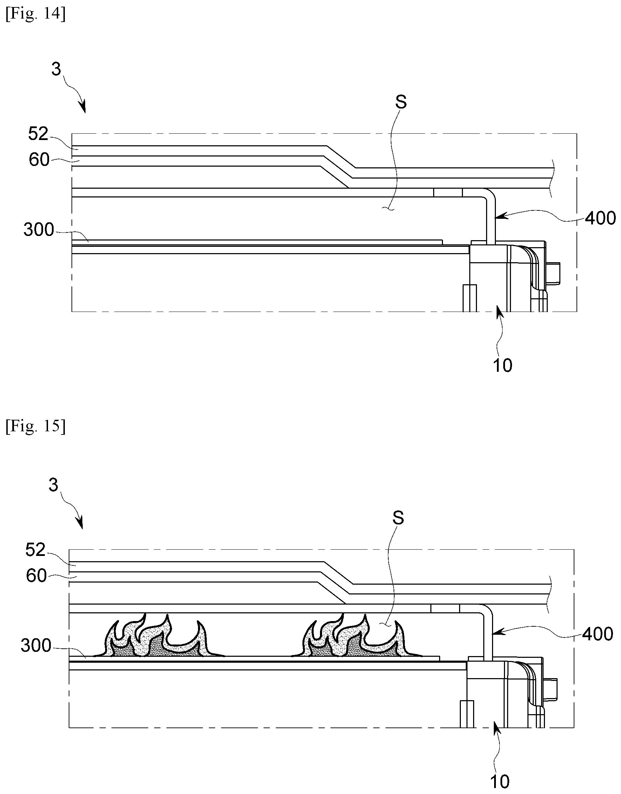

The present invention, in view of such problems, aims to prevent the refractory cover (60) from detaching. Furthermore, the present invention also aims to prevent heat-fractured fragments or the like from falling onto the battery module (10). The structure for achieving these purposes will be described below with reference to FIGS. 14 and 15.

FIG. 14 illustrates the structure of a battery pack according to one embodiment of the present invention, and FIG. 15 illustrates a case in which a thermal event occurs within the battery pack of FIG. 14.

Referring to FIG. 14, the battery pack may further include a refractory cover (60). The refractory cover (60) may be provided on an inner surface of the pack cover (52). The refractory cover (60) may include a refractory material that can withstand high temperature heat or flames. The refractory cover (60) may be made of, for example, mica material or may partially include such material.

The refractory cover (60) can be interposed between the pack cover (52) and the support plate (400). In particular, the refractory cover (60) can be located in the inner space of the pack cover (52). Preferably, the refractory cover (60) may be provided in a form attached to the inner surface of the pack cover (52). For example, the refractory cover (60) can be attached to the inner surface of the pack cover (52) by an adhesive.

According to this structure, it is possible to prevent flames generated in the battery module (10) from spreading to the pack cover (52) of the battery pack. Additionally, it is possible to prevent fire from spreading to other adjacent areas within the battery module (10) where a thermal event occurred.

Referring again to FIGS. 14 and 15, the support plate (400) may be provided in the space between the refractory cover (60) and the battery module (10). Preferably, the support plate (400) may be configured to support the refractory cover (60) in a direction toward the pack cover (52). More specifically, the main body portion (410) of the support plate (400) can support the refractory cover (60) in a direction toward the pack cover (52). That is, the main body portion (410) can support the refractory cover (60) upward. That is, the vertical movement of the support plate (400) can be restricted by the end plate (500) and the pack cover (52). In other words, the support plate (400) can be restrained in the vertical direction by the end plate (500) and the pack cover (52). More specifically, the support plate (400) can be restrained in the vertical direction by the bottom surface of the recess (500R) and the inner surface of the pack cover (52). The support plate (400) can maintain a predetermined space between the frame cover (300) of the battery module (10) and the pack cover (52) of the battery pack.

In this case, the support plate (400) may be configured to be in surface contact with at least a portion of the refractory cover (60). That is, the main body portion (410) may be configured to be in surface contact with the refractory cover (60).

According to this configuration, as shown in FIG. 15, even when a thermal event of the battery module (10) occurs inside the battery pack and the adhesive bond of the refractory cover (60) provided on the inner surface of the pack cover (52) is weakened by heat, the refractory cover (60) may be effectively prevented from falling onto the battery module (10). That is, because the main body portion (410) is in surface contact with the refractory cover (60), the refractory cover (60) may be prevented from detaching even when the adhesive bonding the refractory cover (60) melts.

In addition, according to this configuration, the refractory cover (60) may be prevented from obstructing the venting hole (310) of the battery module (10), thereby maintaining smooth venting of gas or flames. Moreover, according to this configuration, since the main body portion (410) supports the refractory cover (60) in the upward direction, detachment of the refractory cover (60) may be prevented, while the mesh net (411) structure of the main body portion (410) does not obstruct the flow of venting gas.

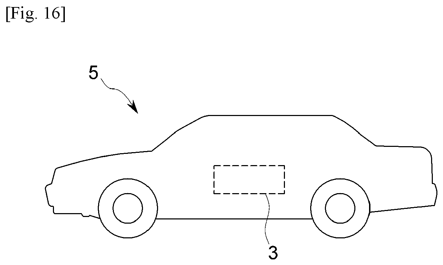

FIG. 16 is a view illustrating a vehicle (5) including the battery pack (3) of FIG. 11.

Referring to FIG. 16, a vehicle (5) according to the present invention may comprise at least one battery pack (3) according to the present invention. A vehicle (5) according to one embodiment of the present invention may be, for example, an electric vehicle, a hybrid vehicle, or a plug-in hybrid vehicle, and may comprise a battery pack (3) according to one embodiment of the present invention. The vehicle (5) includes a four-wheeled vehicle and a two-wheeled vehicle. The vehicle (5) operates by receiving power from a battery pack (3) according to one embodiment of the present invention. In addition, the vehicle (5) according to the present invention may further include various other components included in the vehicle in addition to the battery cell (110) or battery pack (3). For example, a vehicle (5) according to the present invention may further include, in addition to the battery cell (110) according to the present invention, a vehicle body, a motor, and a control device such as an ECU (electronic control unit).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

### [INDUSTRIAL APPLICABILITY]

The present invention can provide a battery module and a battery pack that can prevent a refractory cover provided on the inner surface of a top cover of the battery pack from being detached toward the battery module even when thermal propagation occurs in a battery module included in the battery pack.

## Claims

1. A battery module, comprising:
a cell assembly including a plurality of battery cells;
a module case configured to house the cell assembly in an internal space;
a frame cover positioned on an upper portion of the module case to cover the cell assembly, the frame cover having at least one venting hole; and
a support plate configured to form a predetermined space with the frame cover.

2. The battery module of claim 1, wherein
the support plate is configured to form a vacant space in a peripheral region of a venting hole provided on an upper portion of the battery module.

3. The battery module of claim 1,
wherein the support plate is configured to have a structure protruding upward from the frame cover.

4. The battery module of claim 1, wherein
the support plate comprises:
a main body portion extending in a horizontal direction; and
at least one leg portion extending in a vertical direction from the main body portion.

5. The battery module of claim 4,
wherein the main body portion is configured to be spaced apart from the frame cover of the battery module by a predetermined distance.

6. The battery module of claim 4, wherein
the main body portion comprises a mesh net and a flange portion provided along an edge of the mesh net.

7. The battery module of claim 4, wherein
the leg portion comprises a horizontal extension portion extending in a horizontal direction and a vertical extension portion bent to extend in a vertical direction from an end of the horizontal extension portion.

8. The battery module of claim 4,
further comprising end plates coupled to one longitudinal side and another longitudinal side of the module case and configured to cover both longitudinal ends of the cell assembly.

9. The battery module of claim 8, wherein
the end plate comprises at least one recess formed inward from a surface thereof, and
wherein the leg portion is mounted on the recess provided in the end plate of the battery module.

10. A battery pack, comprising:
at least one battery module according to any one of claims 1 to 9;
a lower case configured to accommodate the at least one battery module;
a pack cover configured to cover an upper portion of the at least one battery module atop the lower case; and
a refractory cover provided on an inner surface of the pack cover.

11. The battery pack of claim 10,
wherein the refractory cover comprises a mica material.

12. The battery pack of claim 10,
wherein the support plate is provided in a space between the refractory cover and the battery module, and is configured to support the refractory cover in a direction toward the pack cover.

13. The battery pack of claim 10, wherein
the support plate is configured to be in surface contact with at least a portion of the refractory cover.

14. A vehicle comprising at least one battery pack according to claim 10.
